# EUROPÄISCHE PATENTSCHRIFT

(11) **EP 4 013 645 B1**
(45) Veröffentlichungstag und Bekanntmachung des Hinweises auf die Patenterteilung: **01.05.2024**
(21) Anmeldenummer: 20753930.5
(22) Anmeldetag: 07.08.2020
(51) Int. Cl.: B60P 1/52, B60P 7/08

(54) **VERFAHREN ZUR ÜBERGABE VON LADEGUT VON EINER LADEGUTAUFNAHME EINES FAHRZEUGES SOWIE FAHRZEUG ZUR DURCHFÜHRUNG DES VERFAHRENS**
METHOD FOR TRANSFERRING CARGO FROM A CARGO RECEIVING PORTION OF A VEHICLE, AND VEHICLE FOR CARRYING OUT SAID METHOD
PROCÉDÉ DE TRANSFERT D'UNE CARGAISON À PARTIR D'UNE PARTIE DE RÉCEPTION DE CARGAISON D'UN VÉHICULE ET VÉHICULE PERMETTANT LA MISE EN ?UVRE DE CE PROCÉDÉ

(30) Priorität: 16.08.2019 DE 102019122055
(43) Veröffentlichungstag der Anmeldung: 22.06.2022
(73) Patentinhaber: Fraunhofer-Gesellschaft zur Förderung der angewandten Forschung e.V., 80686 München (DE)
(72) Erfinder: BEHLING, Jan, 80686 München (DE); ROTGERI, Mathias, 80686 München (DE); EMMERICH, Jan, Sören, 80686 München (DE); HÖNING, Dirk, 80686 München (DE); KLOKOWSKI, Patrick, 80686 München (DE); HAMMERMEISTER, Christian, 80686 München (DE); TEN HOMPEL, Michael, 80686 München (DE)
(74) Vertreter: Meinke, Jochen
(86) Internationale Anmeldenummer: PCT/EP2020/072260
(87) Internationale Veröffentlichungsnummer: WO 2021/032508

(56) Entgegenhaltungen:
- EP-A1- 3 378 769
- CN-A- 105 538 326
- CN-U- 204 324 434
- CN-U- 208 018 986
- DE-A1-102008 030 546
- DE-B4-102008 039 764

## Beschreibung

Die Erfindung betrifft ein Verfahren zur Übergabe von Ladegut von einer Ladegutaufnahme eines Fahrzeuges auf eine Ladegutübernahmestation.

Ferner betrifft die Erfindung ein Fahrzeug zur Durchführung eines solches Verfahrens mit einer Ladegutaufnahme, die auf einem Fahrwerk angeordnet ist, wobei die Ladegutaufnahme wenigstens an einem Seitenrand offen oder öffenbar ausgebildet ist.

In Transportsystemen, insbesondere in Sortiersystemen, werden Ladegüter aus wenigstens einer Aufgabestation in wenigstens eine Ladegutübernahmestation transportiert und sortiert. Bei einem aus einzelnen Fahrzeugen gebildeten hochdynamischen Sortiersystem mit hohem Durchsatz ist eine durchsatzstarke, also möglichst schnelle Übergabe von Ladegut vom Fahrzeug auf die Ladegutübernahmestation (Endstelle) notwendig. Dabei sollte die Ladegutübergabe aus Kostengründen idealerweise vollständig durch das Fahrzeug selbst ausgelöst werden können und keine aktiv angetriebenen Elemente an den Ladegutübernahmestationen voraussetzen, auch zusätzliche aktive Elemente am Fahrzeug, die nur zur Übergabe nötig sind, sollten aus Kostengründen möglichst vermieden werden.

Im Stand der Technik sind eine Vielzahl von Übergabeprinzipien bekannt sowohl für Fahrerlose Transportfahrzeuge als auch aus dem Bereich der konventionellen Sortiertechnik. Fahrerlose Transportfahrzeuge verfügen meist über aktive Lastaufnahmemittel (in der Regel horizontal und/oder teilweise vertikal beweglich).

Dazu zählen Rollenbahnen, Gurtförderer, Gabelzinken, Hubplattformen, Knickarmroboter, spezifische Greifer, Kippschalen u. dgl. Derartige Fahrerlose Transportfahrzeuge sind deshalb sehr aufwendig.

Teilweise verfügen Fahrerlose Transportfahrzeuge über passive Plattformen, von denen ein Mensch oder eine stationäre aktive Technik etwa entnimmt.

Es sind auch zwei Lösungen bekannt, bei denen sowohl das jeweilige Fahrerlose Transportfahrzeug als auch die Ladegutübernahmestation passiv sind. Aus DE 10 2008 039 764 B4 ist eine Vorrichtung zum kammartigen Abstreifen von Transportgütern während der Fahrt des Fahrerlosen Transportfahrzeuges durch eine Station bekannt, wobei das Ladegut an einem statischen Anschlag der Station zurückgehalten wird. Dieses Vorgehen kann jedoch bei höheren Geschwindigkeiten zu Beschädigungen des Ladegutes führen.

Aus DE 10 2015 114 370 B4 ist ein Fahrerloses Transportsystem in einer Lager- und Kommissionieranlage bekannt, bei dem kein Sammeln von mehreren, nacheinander abgegebenen Transportgütern möglich ist, ohne dass zuvor ein aktiver Eingriff (durch einen Menschen wegnehmen oder mittels aktiver Stationen wegfördern) erfolgt.

Aus DE 694 04 649 T2 ist eine Kippvorrichtung für Fahrzeuge mit Ladekasten bekannt. Das Fahrzeug wird auf eine Plattform der Kippvorrichtung gefahren und angehalten. Anschließend wird die Plattform gekippt. Um das Ladegut zu lösen, damit es in eine Mulde rutscht, wird die Plattform, auf der sich das Fahrzeug befindet, in gekippter Position (horizontale Hin- und Herbewegung) gerüttelt. Zur Ladegutübergabe an die Mulde ist also eine Kippvorrichtung an der Ladegutübernahmestation erforderlich, die mit einer aufwendigen Rütteleinrichtung ausgerüstet ist.

Aus DE 10 2015 118 313 A1 ist eine Entladevorrichtung für Fahrzeuge mit Ladefläche bekannt, die an einem Fahrzeug mit Ladefläche angebracht werden kann, nachdem das Fahrzeug angehalten hat. Die Vorrichtung weist einen die Ladung auf der Ladefläche umschließenden Rahmen auf, der mit einem Gestell verbunden wird. Das Fahrzeug fährt anschließend auf Überfahrfortsätze, wodurch die Ladefläche unter dem Rahmen weggezogen und das Ladegut abgeladen wird. Eine Ladegutabgabe an der Ladegutübernahmestation ist also nur mit einer zusätzlichen, teilweise manuell zu bedienenden Entladevorrichtung möglich.

Aus EP 3 378 769 A1 ist das so genannte "combat offloading" zur Abgabe von Ladegut aus einem Transportflugzeug mit rückseitig geöffneter Ladeklappe bekannt.

Die CN 208 018 986 U beschreibt ein Verfahren zur Übergabe von Ladegut von einer Ladegutaufnahme eines Fahrzeuges auf eine Ladegutübernahmestation.

Aufgabe der Erfindung ist es, eine Lösung mit Fahrerlosen Fahrzeugen zu schaffen, bei der die Ladegutübergabe durch das Fahrzeug selbst ausgelöst wird, ohne dass aktiv angetriebene Elemente an der Ladegutübernahmestation und am Fahrzeug notwendig sind.

Diese Aufgabe wird bei einem Verfahren der eingangs bezeichneten Art erfindungsgemäß dadurch gelöst, dass das Fahrzeug von einer Fahrzeugsteuerung derart gesteuert wird, dass der Vektor der Geschwindigkeit des Fahrzeuges unmittelbar vor oder bei Ankunft an der Ladegutübernahmestation

verändert und das Fahrzeug von der Fahrzeugsteuerung und/oder von wenigstens einer im Bereich der Ladegutübernahmestation angeordneten Führungseinrichtung vor Ankunft an der Ladegutübernahmestation so ausgerichtet wird, dass die Bewegungsbahn des sich aufgrund der Änderung des Geschwindigkeitsvektors des Fahrzeuges von der Ladegutaufnahme wegbewegenden Ladegutes in einem Aufnahmebereich der Ladegutübernahmestation endet. Erfindungsgemäß erfolgt somit die Übergabe des Ladegutes vom Fahrzeug auf die Ladegutübernahmestation ohne zusätzliche Elemente, sondern allein durch die Trägheit des Ladegutes. Dabei wird der Vektor der Geschwindigkeit des Fahrzeuges unmittelbar vor oder bei der Ankunft an der Ladegutübernahmestation verändert, d.h. entweder wird der Geschwindigkeitswert als solcher durch Abbremsen stark verringert und/oder es wird die Richtung der Geschwindigkeit verändert, so dass sich das Ladegut selbst aufgrund seiner Trägheit mit dem ursprünglichen Geschwindigkeitsvektor (verringert um die Reibungsverzögerung) weiterbewegt und von der Ladegutaufnahme in die Ladegutübergabestation gelangt. Dazu wird das Fahrzeug vorher von der Fahrzeugsteuerung und/oder von wenigstens einer im Bereich der Ladegutübernahmestation angeordneten Führungseinrichtung so ausgerichtet, dass gewährleistet ist, dass das Ladegut auf dem Aufnahmebereich der Ladegutübernahmestation landet.

Dabei kann nach einer bevorzugten Ausgestaltung vorgesehen sein, dass das Fahrzeug von der Fahrzeugsteuerung bei Ankunft an der Ladegutübernahmestation abgebremst wird.

Durch eine geeignete Abbremsung kann der Geschwindigkeitsunterschied zwischen der ursprünglichen Geschwindigkeit und der verringerten Geschwindigkeit des Fahrzeuges so groß sein, dass das Ladegut sich aufgrund seiner Trägheit auf die Ladegutübergabestation bewegt.

Zusätzlich kann vorgesehen sein, dass das Fahrzeug von der Fahrzeugsteuerung gegen die Ladegutübernahmestation gefahren wird, so dass also eine Kollision mit der Ladeübergabestation stattfindet. Dabei kann die Ladegutübernahmestation mit einem Stoßdämpfer- und/oder Federelement (Bumper) ausgerüstet sein, das den Anstoßvorgang dämpft und ggf. die aufgenommene kinetische Energie an das Fahrzeug abgibt, das dann mit hoher Beschleunigung in eine andere Richtung abgestoßen wird.

Alternativ kann auch vorgesehen sein, dass das Fahrzeug von der Fahrzeugsteuerung ungebremst gegen die Ladegutübernahmestation gefahren wird.

Bei den beiden vorbeschriebenen Ausführungsformen kann das Fahrzeug nach Kontakt mit der Ladgutübernahmestation mit hoher Beschleunigung in eine andere Richtung abgestoßen werden, so dass die Verweildauer des Fahrzeuges an der Ladegutübernahmestation sehr gering ist. Dies ermöglicht eine Abgabe von vielen Ladegütern in kurzer Abfolge und geringe Stillstandszeiten der Fahrzeuge.

Weiterhin ist es zweckmäßig, wenn das Fahrzeug von der Fahrzeugsteuerung in einem spitzen Winkel gegen die Ladegutübernahmestation gefahren wird.

Vorteilhaft ist vorgesehen, dass vor Ankunft an der Ladegutübernahmestation der Reibwert der Oberfläche der Ladegutaufnahme verringert wird. Zur Ladegutabgabe kann der Reibwert verringert werden, während der Fahrt ist der Reibwert erhöht, was sicherstellt, dass das Ladegut nicht ungewollt die Ladegutaufnahme verlassen kann.

Die Erfindung sieht auch zur Durchführung des vorbeschriebenen Verfahrens ein Fahrzeug vor, das sich dadurch auszeichnet, dass die Oberfläche der Ladegutaufnahme so ausgebildet ist, dass ihr Reibwert an der Kontaktoberfläche zum Ladegut veränderbar ist.

Kurz vor Ankunft an der Ladegutübernahmestation wird das Fahrzeug dann so ausgerichtet, dass die Ladegutaufnahme an dem Seitenrand offen ist, der in Richtung zur Ladegutübernahmestation gerichtet ist, so dass das Ladegut durch Veränderung des Geschwindigkeitsvektors des Fahrzeuges die Ladegutübernahmestation erreichen kann. Während einer normalen Fahrt des Fahrzeuges ist die Kontaktfläche dann so eingestellt, dass das Ladegut sicher auf der Ladegutaufnahme verbleibt. Vor der Ladegutabgabe wird der Reibwert verringert, so dass das Ladegut aufgrund seiner Trägheit die Ladegutaufnahme leichter verlassen kann.

Nach einer ersten Ausgestaltung kann vorgesehen sein, dass die Steuerung so eingerichtet ist, dass sie zur Ladegutabgabe ein Steuersignal zur Verringerung des Reibwertes erzeugt.

Alternativ kann auch vorgesehen, dass zur Verringerung des Reibwertes der Kontaktoberfläche wenigstens ein mechanisches Auslöseelement, z.B. Hebel, vorgesehen ist, welches durch Berührungskontakt mit der Ladegutübernahmestation betätigbar ist. Wenn das Auslöseelement durch Kontakt des Fahrzeuges mit der Ladegutübernahmestation zwangsweise mechanisch betätigt wird, wird dann über ein mechanisches Hebelgetriebe od. dgl. die Kontaktoberfläche verändert.

Zur Veränderung des Reibwertes der Kontaktoberfläche kann vorteilhaft vorgesehen sein, dass die Ladegutaufnahme wenigstens eine Auflagefläche mit einer Mehrzahl von Öffnungen aufweist und dass im Bereich der Öffnungen Tragelemente angeordnet sind, wobei die Auflagefläche gegenüber den Tragelementen wenigstens in Vertikalrichtung relativ verfahrbar ausgebildet ist.

Diese Tragelemente können nach einer ersten Ausgestaltung als drehbar gelagerte Rollen oder Kugeln ausgebildet sein.

Alternativ können die Tragelemente auch noppen- oder stegförmig ausgebildet sein.

Die Tragelemente können bevorzugt einen gegenüber der Auflagefläche anderen Reibwert aufweisen, wenn sie als drehbar gelagerte Rollen oder Kugeln ausgebildet sind, dies ist aber nicht zwingend erforderlich.

Schließlich kann vorgesehen sein, dass die Ladegutaufnahme an wenigstens einem Seitenrand eine Randbegrenzung aufweist, deren oberer Rand durch Relativbewegung gegenüber der Oberfläche der Ladegutaufnahme auf dem Niveau der Oberfläche der Ladegutaufnahme oder unterhalb des Niveaus der Oberfläche der Ladegutaufnahme positionierbar ist. Dazu kann die Randbegrenzung z.B. schwenkbar oder vertikal verfahrbar ausgebildet sein.

Die Erfindung ist nachstehend anhand der Zeichnung beispielhaft näher erläutert. Diese zeigt jeweils in perspektivischer Darstellung in
- Fig. 1: eine schematische Darstellung eines zur Durchführung des Verfahrens geeigneten Fahrzeuges nach einer ersten Ausgestaltung,
- Fig. 2: eine schematische Darstellung eines Fahrzeuges nach einer zweiten Ausgestaltung,
- Fig. 3: eine schematische Darstellung eines Fahrzeuges nach einer dritten Ausgestaltung,
- Fig. 4: eine schematische Darstellung eines Fahrzeuges nach einer vierten Ausgestaltung,
- Fig. 5: das Fahrzeug nach Fig. 4 in einer anderen Position der Ladegutaufnahme,
- Fig. 6: eine schematische Darstellung eines Fahrzeuges nach einer fünften Ausgestaltung,
- Fig. 7: eine schematische Darstellung eines Fahrzeuges nach einer sechsten Ausgestaltung,
- Fig. 8: eine schematische Darstellung eines Fahrzeuges nach einer siebten Ausgestaltung,
- Fig. 9: eine schematische Darstellung einer Ladegutübernahmestation nach einer ersten Ausgestaltung,
- Fig. 10: eine schematische Darstellung einer Ladegutübernahmestation nach einer zweiten Ausgestaltung,
- Fig. 11: ein Fahrzeug nach Fig. 3 mit Ladegut vor Ankunft an einer Ladegutübernahmestation,
- Fig. 12: das Fahrzeug kurz vor der Ankunft an der Ladegutübernahmestation,
- Fig. 13: das Fahrzeug während der Ladegutabgabe und
- Fig. 14: das Fahrzeug während der Abfahrt mit übergebenem Ladegut.

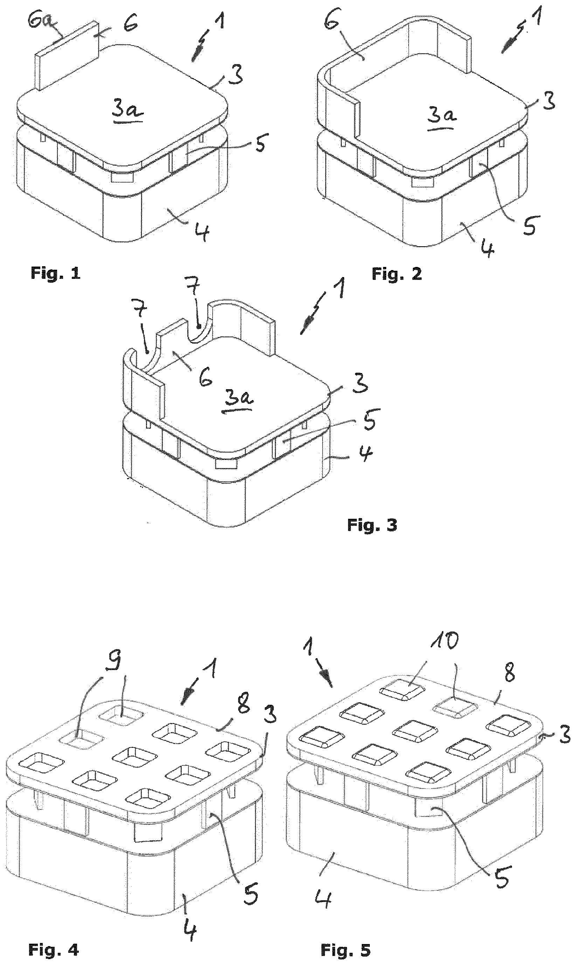

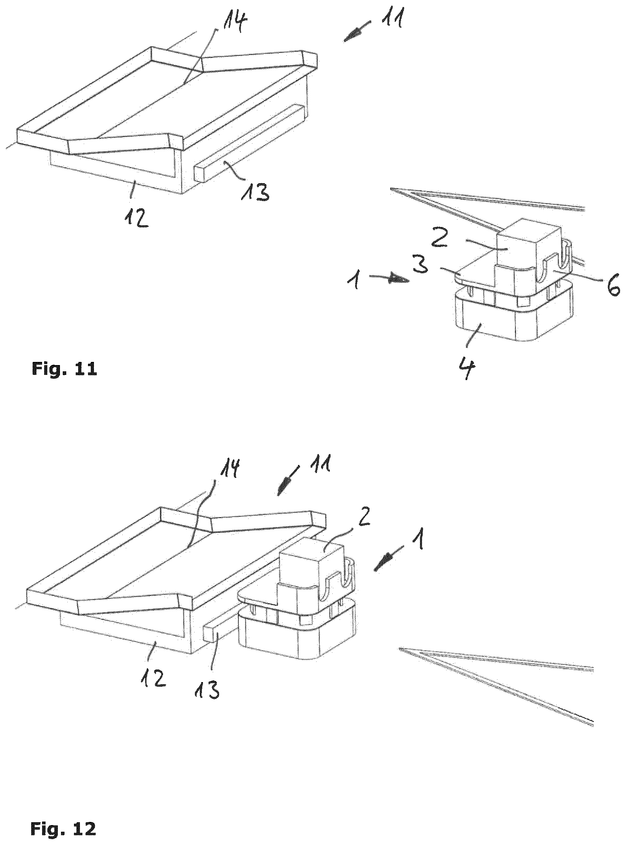

Ein zur Durchführung eines mit Bezug auf die Figuren 11 bis 14 weiter unten beschriebenen Verfahrens geeignetes Fahrzeug ist in den Figuren allgemein mit 1 bezeichnet. Dieses vorzugsweise Fahrerlose Fahrzeug 1 zum Transport und zur Übergabe bzw. Abgabe von Ladegut 2 weist beim Ausführungsbeispiel nach Fig. 1 eine flächige Ladegutaufnahme 3 auf, auf welcher das Ladegut 2 zum Transport angeordnet ist. Die Ladegutaufnahme 3 besteht z.B. aus Metall oder Kunststoff, ihre Oberfläche 3a ist bei diesem Ausführungsbeispiel eben. Das Fahrzeug 1 weist darüber hinaus ein allgemein mit 4 bezeichnetes Fahrwerk auf, an dessen Unterseite Fahrrollen bzw. Fahrräder angeordnet sind, die nicht dargestellt sind.

Bei den dargestellten Ausführungsbeispielen ist die Ladegutaufnahme 3 nicht direkt auf dem Fahrwerk 4 angeordnet, sondern zwischen der Oberseite des Fahrwerkes 4 und der Unterseite der Ladegutaufnahme 3 ist ein Zwischenkörper 5 angeordnet. Zur Sicherung des Ladegutes 2 auf der Ladegutaufnahme 3 während des Transports ist eine Randbegrenzung 6 vorgesehen, die sich nur über einen Teilbereich des Umfanges der Ladegutaufnahme 3 erstreckt, so dass das Fahrzeug 1 an einem Seitenrand vollständig offen ist.

Beim Ausführungsbeispiel nach Fig. 1 ist die Randbegrenzung 6 querschnittlich stegförmig ausgebildet und erstreckt sich nur an einer Seite der Ladegutaufnahme 3.

Alternativ kann gemäß Fig. 2 auch vorgesehen sein, dass die ebenfalls mit 6 bezeichnete Randbegrenzung querschnittlich C-förmig ausgebildet ist, d.h. es ist gegenüber dem Halteelement 6 nach Fig. 1 in den Eckbereichen bogen- oder winkelförmig verlängert und erstreckt sich damit bereichsweise in die angrenzenden Seitenränder der Ladegutaufnahme 3.

Bei der Ausführungsform nach den Fig. 3 ist die Randbegrenzung 6 ebenfalls querschnittlich C-förmig ausgebildet, weist jedoch zwei seitliche Aussparungen 7 auf. Diese Aussparungen 7 ermöglichen einen Zugang zur Ladegutaufnahme 3 auch von der Seite, an der sich die Randbegrenzung 6 befindet.

Der obere Rand 6a der Randbegrenzung 6 kann durch Relativbewegung gegenüber der Oberfläche 3a der Ladegutaufnahme 3 auf dem Niveau der Oberfläche 3a der Ladegutaufnahme 3 oder unterhalb des Niveaus der Oberfläche 3a der Ladegutaufnahme 3 positionierbar ausgebildet sein. Dazu kann die Randbegrenzung 6 verschwenkbar an der Ladegutaufnahme 3 angeordnet sein. Alternativ kann auch eine vertikale Verstellung vorgesehen sein.

In Fig. 4 und 5 ist ein Fahrzeug 1 dargestellt, bei welchem die Ladegutaufnahme 3 wenigstens eine Auflagefläche 8 mit einer Mehrzahl von Öffnungen 9 aufweist, wobei im Bereich der Öffnungen 9 Tragelemente 10 angeordnet sind. Diese Tragelemente 10 sind beim Ausführungsbeispiel nach Fig. 4 und 5 noppenförmig ausgebildet und bestehen z.B. aus Gummi. Sie weisen bei dieser Ausführungsform einen höheren Reibwert auf als die Oberfläche der Auflagefläche 8. Die Auflagefläche 8 ist gegenüber den noppenförmigen Tragelementen 10 wenigstens in Vertikalrichtung relativ verfahrbar ausgebildet. Dadurch ist es möglich, dass ausgehend von der in Fig. 4 dargestellten Position, in welcher sich die noppenförmigen Tragelemente 10 unterhalb des Niveaus der Oberfläche der Auflagefläche 8 befinden, durch Relativbewegung in vertikaler Richtung die noppenförmigen Tragelemente 10 in eine Position oberhalb des Niveaus der Oberfläche der Auflagefläche 8 gelangen, so dass das Ladegut 2 dann nicht mehr auf der Auflagefläche 8, sondern den noppenförmigen Tragelementen 10 aufliegt.

In der in Fig. 4 dargestellten Position befinden sich die Tragelemente 10 also unterhalb des Niveaus der Oberfläche der Auflagefläche 8, d.h. sie sind nicht wirksam. In dieser Position befindet sich das Fahrzeug 1 während der Ladegutübergabe.

Demgegenüber zeigt Fig. 5 die Transportposition des Fahrzeuges 1. In dieser Position greifen die noppenförmigen Tragelemente 10 durch die Öffnungen 9 hindurch nach oben, so dass sich die noppenförmigen Tragelemente 10 oberhalb des Niveaus der Oberfläche der Auflagefläche 8 befinden und wirksam sind. In dieser Position weist die Oberfläche der Ladegutaufnahme 3 einen höheren Reibwert auf als in der Position gemäß Fig. 4.

Alternativ können auch die noppenförmigen Tragelemente 10 einen geringeren Reibwert als die Oberfläche der Auflagefläche 8 aufweisen. In diesem Fall zeigt Fig. 4 die Transportposition und Fig. 5 die Ladegutübergabeposition.

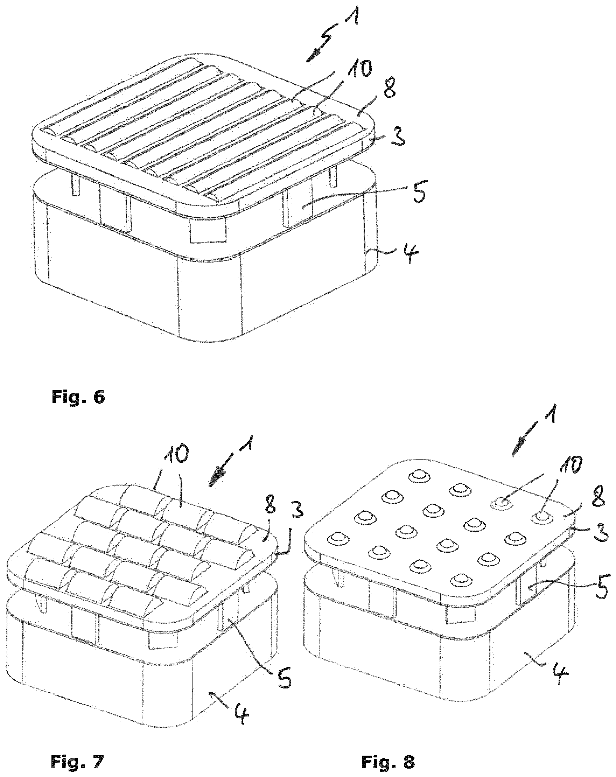

In Fig. 6 ist ein Fahrzeug dargestellt, bei dem die Tragelemente 10 als längliche Rollen ausgebildet sind. Die Auflagefläche 8 ist wiederum gegenüber den Tragelementen 10 wenigstens in Vertikalrichtung relativ verfahrbar ausgebildet. Dadurch ist es möglich, dass ausgehend von der in Fig. 6 dargestellten Position, in welcher die als Rollen ausgebildeten Tragelemente 10 nach oben über die Oberfläche der Auflagefläche 8 herausragen, die Tragelemente 10 durch Relativbewegung in vertikaler Richtung unter das Niveau der Oberfläche der Auflagefläche 8 gebracht werden, so dass das Ladegut 2 dann nicht mehr auf den Tragelementen 10, sondern nur auf der Auflagefläche 8 aufliegt.

Wenn die Oberfläche der Auflagefläche 8 und die Oberfläche der Tragelemente 10 einen anderen Reibwert haben, lässt sich dadurch der Reibwert der Oberfläche der Ladegutaufnahme 3 verändern, je nachdem ob das Ladegut 2 transportiert oder abgegeben werden soll. Der Reibwert der Oberfläche kann aber auch derselbe wie der der als Rollen ausgebildeten Tragelemente 10 sein. Wenn zur Ladegutabgabe bzw. -Übergabe die Tragelemente 10 über das Niveau der Oberfläche der Auflagefläche 8 angehoben sind und das Fahrzeug 1 so ausgerichtet wird, dass die Bewegungsbahn des Ladegutes 2 mit der Rollrichtung der als Rollen ausgebildeten Tragelemente 10 übereinstimmt, wird die Ladegutabgabe erleichtert, da dann nur die Rollreibung wirksam ist.

Alternativ können die rollenförmigen Tragelemente 10 auch gebremst und zur Ladegutabgabe kann die Bremswirkung aufgehoben werden.

In Fig. 7 ist ein der Fig. 6 nahezu entsprechendes Fahrzeug 1 dargestellt, der einzige Unterschied ist, dass die Tragelemente 10 nicht als drehbar gelagerte längliche Rollen, sondern als drehbar gelagerte Rollenabschnitte ausgebildet sind.

In Fig. 8 ist ein der Fig. 6 nahezu entsprechendes Fahrzeug 1 dargestellt, der einzige Unterschied ist, dass die Tragelemente 10 nicht als drehbar gelagerte längliche Rollen, sondern als drehbar gelagerte Kugeln ausgebildet sind.

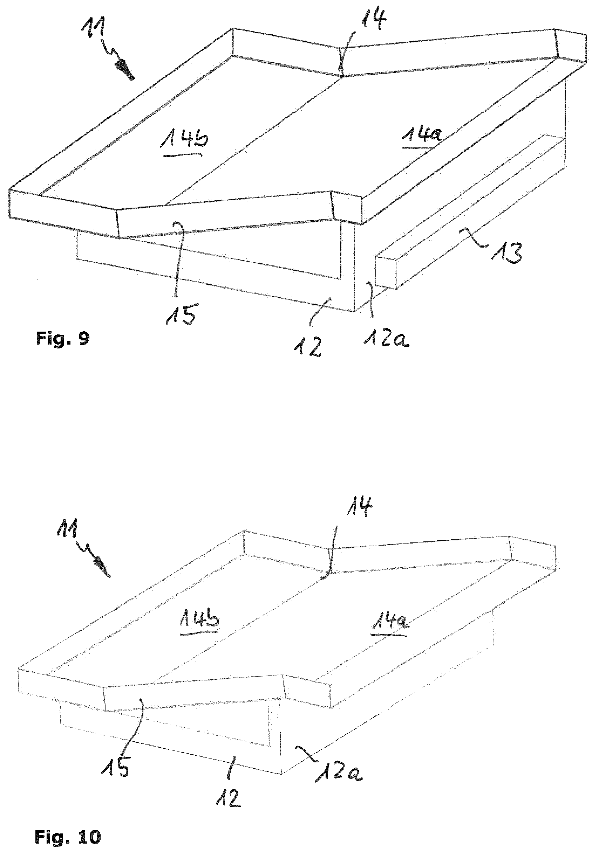

In Fig. 9 ist eine erste Ausführungsform einer Ladegutübernahmestation 11 dargestellt. Diese Ladegutübernahmestation 11 weist eine Basis 12 mit einer Vorderseite 12a auf, an welcher vorzugsweise ein Stoßdämpfer- und/oder Federelement 13 (Bumper) angeordnet ist.

Auf der aus einem Winkelprofil gebildeten Basis 12 der Ladegutübernahmestation 11 ist ein Aufnahmebereich 14 angeordnet, der an der Vorderseite 12a der Basis 12 offen ist und ansonsten vorzugsweise Seitenränder 15 aufweist. Im dargestellten Ausführungsbeispiel ist die Bodenfläche des Aufnahmebereiches 14 zunächst schräg abfallend, dieser Bereich ist mit 14a bezeichnet, der hintere Bereich ist z.B. waagerecht und mit 14b bezeichnet.

In Fig. 10 ist eine alternative Ladegutübernahmestation 11 dargestellt, die sich von derjenigen nach Fig. 9 dadurch unterscheidet, dass kein Stoßdämpfer- und/ oder Federelement 13 vorgesehen ist.

In den Fig. 11 bis 14 ist beispielhaft ein erfindungsgemäßer Verfahrensablauf dargestellt:
In Fig. 11 ist eine Ladegutaufnahme 11 dargestellt, in welcher sich noch kein Ladegut befindet. Stattdessen ist ein Ladegut 2 auf einem Fahrzeug 1 angeordnet, das sich in normaler Fahrt befindet und welches das Ladegut 2 auf die Ladegutübernahmestation 11 abgeben soll. Das Fahrzeug 1 ist dabei bereits so ausgerichtet, dass sich die Randbegrenzung 6 in Fahrtrichtung gesehen hinten befindet, so dass die Ladegutaufnahme 3 in Fahrtrichtung gesehen vorne offen ist und das Ladegut 2 dementsprechend nach vorne hin abgegeben werden kann.

In Fig. 12 ist eine Situation dargestellt, in der sich das Fahrzeug 1 kurz vor der Ladegutübernahmestation 11 befindet. Der Geschwindigkeitsvektor des Fahrzeuges 1 kann bereits verändert worden sein, indem das Fahrzeug 1 seine Richtung verändert hat und/oder von der Fahrzeugsteuerung abgebremst worden ist. Das Fahrzeug 1 kann aber auch mit unveränderter Geschwindigkeit fahren. Das Ladegut 2 befindet sich noch auf dem Fahrzeug 1.

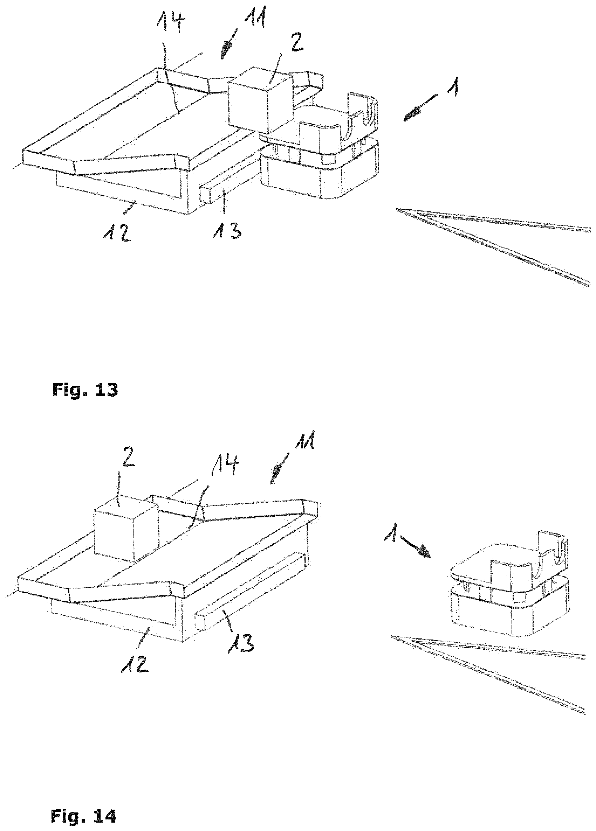

In Fig. 13 ist eine Position dargestellt, in welcher sich das Ladegut 2 vom Fahrzeug 1 bzw. der Ladegutaufnahme 3 auf die Ladegutübernahmestation 11 bewegt, nachdem das Fahrzeug 1 die Ladegutübernahmestation 11 erreicht hat, wobei es ungebremst oder mit reduzierter Geschwindigkeit gegen den Stoßdämpfer- und/oder Federelement 13 gefahren ist. Aufgrund der Änderung des Geschwindigkeitsvektors des Fahrzeuges 1 bewegt sich das Ladegut 2 aufgrund seiner Trägheit in der ursprünglichen Richtung von der Ladegutaufnahme 3 in den Aufnahmebereich 14 der Ladegutübernahmestation 11.

Wenn das Fahrzeug 1 so ausgebildet ist, dass der Reibwert der Oberfläche 3a der Ladegutaufnahme 3 verringert werden kann (Ausführungsform gemäß Fig. 4 bis 8), wird zur Erleichterung der Abgabe des Ladegutes 2 der Reibwert entsprechend verringert, was durch ein Steuersignal der Fahrzeugsteuerung geschehen kann oder alternativ auch durch ein Auslöseelement am Fahrzeug 1, das beim Anprall an der Ladegutübernahmestation 11 betätigbar ist und über eine Kinematik (Hebelgetriebe od. dgl.) die Veränderung bewirkt.

In Fig. 14 ist die Endposition dargestellt. Das Ladegut 2 befindet sich in der Ladegutübernahmestation 11, das Fahrzeug 1 hat sich bereits von der Ladegutübernahmestation 11 entfernt, auf seiner Ladegutaufnahme 3 befindet sich kein Ladegut mehr. Das Fahrzeug 1 kann durch den Anprall am Stoßdämpfer- und/oder Federelement 13 wieder beschleunigt werden oder es kann zur Weiterfahrt zusätzlich bzw. alternativ von der Fahrzeugsteuerung mit steigender Geschwindigkeit bewegt werden.

Natürlich ist die Erfindung nicht auf die dargestellten Ausführungsbeispiele beschränkt. Weitere Ausgestaltungen sind möglich, ohne den Grundgedanken zu verlassen. So kann wenigstens eine im Bereich der Ladegutübernahmestation 11 angeordnete Führungseinrichtung vorgesehen sein, mittels derer vor Ankunft an der Ladegutübernahmestation das Fahrzeug 1 so ausgerichtet wird, dass die Bewegungsbahn des sich aufgrund der Änderung des Geschwindigkeitsvektors von der Ladegutaufnahme 3 wegbewegenden Ladegutes 2 in dem Aufnahmebereich 14 der Ladegutübernahmestation 11 endet.

Letzteres kann auch dadurch realisiert werden, dass die Ladegutübernahmestation 11 eine Rampe aufweist, auf der das Fahrzeug vor der Ladegutabgabe hinauffährt. Am Ende der Rampe wird durch Änderung des Geschwindigkeitsvektors das Ladegut abgegeben und fliegt sozusagen im Bogen in den Aufnahmebereich 14 der Ladegutübernahmestation 11. Dabei kann zur Minderung der zwangsläufig wirkenden Kräfte z.B. eine weitere Rampe im Landebereich vorgesehen werden. Das Ladegut 2 landet dann sanft und rutscht den Weg herunter in einen Sammelbereich der Ladegutübernahmestation 11 (vergleichbar mit der Flugbahn eines Skispringers). Alternativ dazu ist auch eine schräge Anfahrt auf die Rampe möglich.

### Bezugszeichenliste:

- 1: Fahrzeug
- 2: Ladegut
- 3: Ladegutaufnahme
- 3a: Oberfläche
- 4: Fahrwerk
- 5: Zwischenkörper
- 6: Randbegrenzung
- 6a: oberer Rand
- 7: Aussparungen
- 8: Auflagefläche
- 9: Öffnungen
- 10: Tragelemente
- 11: Ladegutübernahmestation
- 12: Basis
- 12a: Vorderseite
- 13: Stoßdämpfer- und/oder Federelement
- 14: Aufnahmebereich
- 14a: Bereich
- 14b: Bereich

## Patentansprüche

1. Verfahren zur Übergabe von Ladegut (2) von einer Ladegutaufnahme (3) eines Fahrzeuges (1) auf eine Ladegutübernahmestation (11),
**dadurch gekennzeichnet,**
**dass** das Fahrzeug (1) von einer Fahrzeugsteuerung derart gesteuert wird, dass der Vektor der Geschwindigkeit des Fahrzeuges (1) unmittelbar vor oder bei Ankunft an der Ladegutübernahmestation (11) verändert und das Fahrzeug (1) von der Fahrzeugsteuerung und/oder von wenigstens einer im Bereich der Ladegutübernahmestation (11) angeordneten Führungseinrichtung vor Ankunft an der Ladegutübernahmestation (11) so ausgerichtet wird, dass die Bewegungsbahn des sich aufgrund der Änderung des Geschwindigkeitsvektors des Fahrzeuges (1) von der Ladegutaufnahme (3) wegbewegenden Ladegutes (2) in einem Aufnahmebereich (14) der Ladegutübernahmestation (11) endet.

2. Verfahren nach Anspruch 1,
**dadurch gekennzeichnet,**
**dass** das Fahrzeug (1) von der Fahrzeugsteuerung gegen die Ladegutübernahmestation (11) gefahren wird.

3. Verfahren nach Anspruch 1,
**dadurch gekennzeichnet, dass** das Fahrzeug (1) von der Fahrzeugsteuerung bei Ankunft an der Ladegutübernahmestation (11) abgebremst wird oder
dass das Fahrzeug (1) von der Fahrzeugsteuerung ungebremst gegen die Ladegutübernahmestation (11) gefahren wird.

4. Verfahren nach Anspruch 2 oder nach dem zweiten optionalen Merkmal von Anspruch 3,
**dadurch gekennzeichnet,**
**dass** das Fahrzeug (1) von der Fahrzeugsteuerung in einem spitzen Winkel gegen die Ladegutübernahmestation (11) gefahren wird.

5. Verfahren nach einem oder mehreren der Ansprüche 1 bis 4,
**dadurch gekennzeichnet,**
**dass** vor Ankunft an der Ladegutübernahmestation (11) der Reibwert der Oberfläche (3a) der Ladegutaufnahme (3) verringert wird.

6. Fahrzeug zur Durchführung des Verfahrens nach Anspruch 5 mit einer Ladegutaufnahme (3), die auf einem Fahrwerk (4) angeordnet ist, wobei die Ladegutaufnahme (3) wenigstens an einem Seitenrand offen oder öffenbar ausgebildet ist, wobei das Fahrzeug
eine Fahrzeugsteuerung aufweist und wobei die Oberfläche (3a) der Ladegutaufnahme (3) so ausgebildet ist, dass ihr Reibwert an der Kontaktoberfläche zum Ladegut (2) veränderbar ist.

7. Fahrzeug nach Anspruch 6,
**dadurch gekennzeichnet,**
**dass** die Steuerung so eingerichtet ist, dass sie zur Ladegutabgabe ein Steuersignal zur Verringerung des Reibwertes erzeugt.

8. Fahrzeug nach Anspruch 6,
**dadurch gekennzeichnet,**
**dass** zur Verringerung des Reibwertes der Kontaktoberfläche wenigstens ein mechanisches Auslöseelement vorgesehen ist, welches durch Berührungskontakt mit der Ladegutübernahmestation (11) betätigbar ist.

9. Fahrzeug nach Anspruch 6, 7 oder 8,
**dadurch gekennzeichnet,**
**dass** die Ladegutaufnahme (3) wenigstens eine Auflagefläche (8) mit einer Mehrzahl von Öffnungen (9) aufweist und dass im Bereich der Öffnungen (9) Tragelemente (10) angeordnet sind, wobei die Auflagefläche (8) gegenüber den Tragelementen (10) wenigstens in Vertikalrichtung relativ verfahrbar ausgebildet ist.

10. Fahrzeug nach Anspruch 9,
**dadurch gekennzeichnet,**
**dass** die Tragelemente (10) als drehbar gelagerte Rollen oder Kugeln ausgebildet sind.

11. Fahrzeug nach Anspruch 9,
**dadurch gekennzeichnet,**
**dass** die Tragelemente (10) noppen- oder stegförmig ausgebildet sind.

12. Fahrzeug nach Anspruch 9, 10 oder 11,
**dadurch gekennzeichnet,**
**dass** die Tragelemente (10) einen gegenüber der Auflagefläche (8) anderen Reibwert aufweisen.

13. Fahrzeug nach einem oder mehreren der Ansprüche 6 bis 12,
**dadurch gekennzeichnet,**
**dass** die Ladegutaufnahme (3) an wenigstens einem Seitenrand eine Randbegrenzung (6) aufweist, deren oberer Rand (6a) durch Relativbewegung gegenüber der Oberfläche (3a) der Ladegutaufnahme (3) auf dem Niveau der Oberfläche (3a) der Ladegutaufnahme (3) oder unterhalb des Niveaus der Oberfläche (3a) der Ladegutaufnahme (3) positionierbar ist.

## Claims

1. Method for transferring cargo (2) from a cargo receiving portion (3) of a vehicle (1) to a cargo take-up station (11),
**characterized in that**
the vehicle (1) is controlled by a vehicle control unit such that the vector of the velocity of the vehicle (1) is changed immediately before or on arrival at the cargo take-up station (11) and the vehicle (1) is oriented by the vehicle control unit and/or by at least one guiding system positioned in the region of the cargo take-up station (11) before the arrival at the cargo take-up station (11) such that the trajectory of the cargo (2) moving away from the cargo receiving portion (3) as a result of the change of the velocity vector ends in a receiving section (14) of the cargo take-up station (11).

2. Method according to claim 1,
**characterized in that**
the vehicle (1) is driven by the vehicle control unit against the cargo take-up station (11).

3. Method according to claim 1,
**characterized in that** the vehicle (1) is braked by the vehicle control unit upon arrival at the cargo take-up station (11) or **in that** the vehicle (1) is driven by the vehicle control unit against the cargo take-up station (11) without being braked.

4. Method according to claim 2 or according to the second optional feature of claim 3, **characterized in that**
the vehicle (1) is driven by the vehicle control unit at an acute angle against the cargo take-up station (11).

5. Method according to one or more of claims 1 to 4,
**characterized in that**
the coefficient of friction of the surface (3a) of the cargo receiving portion (3) is reduced before arrival at the cargo take-up station (11).

6. Vehicle for performing the method according to claim 5 having a cargo receiving portion (3), which is arranged on a chassis (4), wherein the cargo receiving portion (3) is configured to be open or openable on at least one side edge, wherein the vehicle has a vehicle control unit and wherein the surface (3a) of the cargo receiving portion (3) is configured such that its coefficient of friction at the contact surface with the cargo (2) can be varied.

7. Vehicle according to claim 6,
**characterized in that**
the control unit is configured such that it generates a control signal for reducing the coefficient of friction when the cargo is delivered.

8. Vehicle according to claim 6,
**characterized in that**
to reduce the coefficient of friction of the contact surface at least one mechanical release element is provided which can be actuated by physical contact with the cargo take-up station (11).

9. Vehicle according to claim 6, 7 or 8,
**characterized in that**
the cargo receiving portion (3) has at least one bearing surface (8) with a plurality of openings (9) and **in that** support elements (10) are arranged in the region of the openings (9), wherein the bearing surface (8) is configured to be displaceable relative at least to the vertical direction with respect to the support elements (10).

10. Vehicle according to claim 9,
**characterized in that**
the support elements (10) are configured as rotatably mounted rollers or balls.

11. Vehicle according to claim 9,
**characterized in that**
the support elements (10) are configured to be stud or web-like.

12. Vehicle according to claim 9, 10 or 11,
**characterized in that**
the support elements (10) have a different coefficient of friction compared with the bearing surface (8).

13. Vehicle according to one or more of claims 6 to 12,
**characterized in that**
the cargo receiving portion (3) has an edge boundary (6) on at least one side edge, the upper edge (6a) of which can be positioned by relative movement with respect to the surface (3a) of the cargo receiving portion (3) at the level of the surface (3a) of the cargo receiving portion (3) or below the level of the surface (3a) of the cargo receiving portion (3).

## Revendications

1. Procédé de transfert d'une cargaison (2) d'une partie de réception de cargaison (3) d'un véhicule (1) à un poste de prise en charge de cargaison (11),
**caractérisé en ce que**
le véhicule (1) est commandé par un dispositif de commande de véhicule de sorte que le vecteur de la vitesse du véhicule (1) est modifié immédiatement avant ou à l'arrivée au poste de prise en charge de cargaison (11) et le véhicule (1) est orienté par le dispositif de commande de véhicule et/ou par au moins un dispositif de guidage disposé dans la zone du poste de prise en charge de cargaison (11) avant l'arrivée au poste de prise en charge de cargaison (11), de sorte que la trajectoire de déplacement de la cargaison (2) s'éloignant de la réception de cargaison (3) en raison de la modification du vecteur de vitesse du véhicule (1) se termine dans une zone de réception (14) du poste de prise en charge de cargaison (11).

2. Procédé selon la revendication 1,
**caractérisé en ce que**
le véhicule (1) est conduit par le dispositif de commande de véhicule contre le poste de prise en charge de cargaison (11).

3. Procédé selon la revendication 1,
**caractérisé en ce que** le véhicule (1) est freiné par le dispositif de commande de véhicule à l'arrivée au poste de prise en charge de cargaison (11) ou **en ce que** le véhicule (1) est conduit sans freinage par le dispositif de commande de véhicule contre le poste de prise en charge de cargaison (11).

4. Procédé selon la revendication 2 ou selon la seconde caractéristique facultative de la revendication 3,
**caractérisé en ce que**
le véhicule (1) est conduit par le dispositif de commande de véhicule selon un angle aigu contre le poste de prise en charge de cargaison (11).

5. Procédé selon une ou plusieurs des revendications 1 à 4,
**caractérisé en ce que**
avant l'arrivée au poste de prise en charge de cargaison (11), le coefficient de frottement de la surface (3a) de la partie de réception de cargaison (3) est réduit.

6. Véhicule pour la mise en oeuvre du procédé selon la revendication 5 avec une partie de réception de cargaison (3) qui est disposée sur un châssis (4), dans lequel la partie de réception de cargaison (3) est conçue ouverte ou ouvrable au moins sur un bord latéral, dans lequel le véhicule présente un dispositif de commande de véhicule et dans lequel la surface (3a) de la partie de réception de cargaison (3) est conçue de sorte que son coefficient de frottement au niveau de la surface de contact avec la cargaison (2) est modifiable.

7. Véhicule selon la revendication 6,
**caractérisé en ce que**
le dispositif de commande est agencé de sorte qu'il génère un signal de commande pour réduire le coefficient de frottement lorsque la cargaison est livrée.

8. Véhicule selon la revendication 6,
**caractérisé en ce que**
pour réduire le coefficient de frottement de la surface de contact, au moins un élément de déclenchement mécanique qui peut être actionné par contact physique avec le poste de prise en charge de cargaison (11) est prévu.

9. Véhicule selon la revendication 6, 7 ou 8,
**caractérisé en ce que**
la partie de réception de cargaison (3) présente au moins une surface d'appui (8) avec une pluralité d'ouvertures (9) et **en ce que** des éléments de support (10) sont disposés au niveau des ouvertures (9), dans lequel la surface d'appui (8) est conçue de manière relativement déplaçable par rapport aux éléments de support (10) au moins dans la direction verticale.

10. Véhicule selon la revendication 9,
**caractérisé en ce que**
les éléments de support (10) sont conçus sous forme de rouleaux ou de billes montés de manière rotative.

11. Véhicule selon la revendication 9,
**caractérisé en ce que**
les éléments de support (10) sont conçus en forme de picots ou de barrettes.

12. Véhicule selon la revendication 9, 10 ou 11,
**caractérisé en ce que**
les éléments de support (10) présentent un coefficient de frottement différent de celui de la surface d'appui (8).

13. Véhicule selon une ou plusieurs des revendications 6 à 12,
**caractérisé en ce que**
la partie de réception de cargaison (3) présente sur au moins un bord latéral une délimitation de bord (6) dont le bord supérieur (6a) peut être positionné par un mouvement relatif par rapport à la surface (3a) partie de réception de cargaison (3) au niveau de la surface (3a) de la partie de réception de cargaison (3) ou sous le niveau de la surface (3a) de la partie de réception de cargaison (3).
